# DEMANDE DE BREVET EUROPEEN

(11) **EP 1 128 661 A1**
(43) Date de publication de la demande: **29.08.2001**
(21) Numéro de dépôt: 00200597.3
(22) Date de dépôt: 22.02.2000
(51) Int. Cl.: H04N 3/15

(54) **Procédé permettant d'opérer un capteur d'image CMOS**

(71) Demandeur: ASULAB S.A., CH-2501 Bienne (CH)
(72) Inventeur: Lauxtermann, Stefan, 8965 Berikon (CH); Tanner, Steve, 1400 Yverdon-les-Bains (CH); Grupp, Joachim, 2073 Enges (CH)
(74) Mandataire: Ravenel, Thierry Gérard Louis

(57) **Abrégé**

La présente invention concerne un procédé permettant d'opérer un capteur d'image CMOS comportant une matrice de pixels (50) agencés en une pluralité de lignes et de colonnes, chacun desdits pixels comportant un élément photo-détecteur (PD) accumulant des porteurs de charge en proportion de son illumination et un moyen de stockage (C1, 55) susceptible d'être couplé à l'élément photo-détecteur à un instant déterminé afin de produire un signal échantillonné représentatif des porteurs de charge accumulés par l'élément photo-détecteur, le moyen de stockage (C1, 55) étant destiné à assurer une mémorisation en vue d'une lecture du signal échantillonné.

Selon la présente invention, lors d'une lecture dudit signal échantillonné, mémorisé sur le moyen de stockage, l'élément photo-détecteur est maintenu à une tension telle que tout porteur de charge généré par celui-ci est drainé et ne perturbe ainsi pas le signal échantillonné mémorisé sur le moyen de stockage.

Selon la présente invention, on répond ainsi au problème de diffusion des porteurs de charge typiquement rencontré avec de tels capteurs lorsque ceux-ci sont opérés selon des techniques conventionnelles. Ce procédé permet en particulier une utilisation d'un tel capteur pour des applications où le temps d'exposition d'une image est déterminant car très court.

## Description

La présente invention concerne généralement un procédé permettant d'opérer un capteur d'image intégré. Plus particulièrement, la présente invention concerne un procédé permettant d'opérer un capteur d'image intégré en technologie CMOS. De tels capteurs d'image CMOS sont en particulier destinés à la réalisation de dispositifs photographiques et vidéos intégrés.

Grâce aux technologies actuelles d'intégration, il est possible de réaliser sous forme intégrée un dispositif opérationnel de prise d'images. Un tel dispositif intégré de prise d'images incorpore, sur une même puce, un composant photo-détecteur formé d'un ensemble d'éléments photo-détecteurs organisés typiquement sous forme de matrice, et un composant de traitement destiné à assurer les opérations de prise d'images et de lecture de l'information capturée par le composant photo-détecteur.

Traditionnellement, les dispositifs intégrés de prise d'images font appel à des techniques de transfert de charge. Selon ces techniques, des charges photo-générées sont collectées et transférées d'une manière déterminée. Les techniques de transfert de charge les plus communes utilisent des composants CCD ("charge-coupled devices") ou des composants CID ("charge injection devices"). Bien que ces dispositifs employant ces composants aient trouvé de nombreuses applications commerciales, ces dispositifs présentent néanmoins de sérieux désavantages. En particulier, ces composants font appel à des techniques de fabrication non standards, et en particulier incompatibles avec les processus de fabrication CMOS standards. Des tels composants sont donc des obstacles, en termes de coût et de facilité de fabrication, à l'intégration totale de capteurs d'images.

En complément des techniques susmentionnées, un concept a été développé autour de l'utilisation de jonctions p-n semi-conducteurs comme éléments photo-détecteurs, ces jonctions étant communément dénommées photodiodes. L'avantage essentiel de tels éléments est leur parfaite compatibilité avec les processus de fabrication CMOS standard. On connaît ainsi de l'art antérieur, notamment du document "A Random Access Photodiode Array for Intelligent Image Capture" de Orly Yadid-Pecht, Ran Ginosar et Yosi Shacham Diamand, IEEE Transactions On Electron Devices, Vol. 38, no. 8, août 1991, pp. 1772-1780, incorporé ici par référence, des solutions faisant appel à des photodiodes comme éléments photo-détecteur.

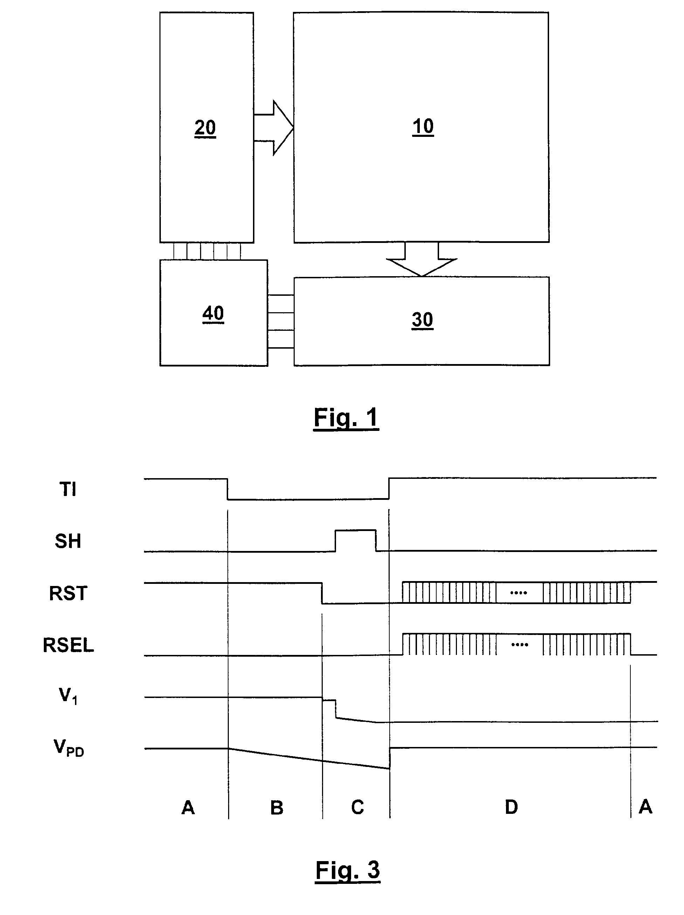

Ce document décrit ainsi un capteur d'image intégré en technologie CMOS sous forme d'une unique puce. L'architecture de ce capteur, qui est similaire à celle de mémoires RAM, est illustrée à la figure 1. Ce capteur, indiqué généralement par la référence numérique 1, comporte une matrice 10 de pixels agencés en M lignes et N colonnes. Cette matrice 10 occupe la majeure partie de la surface du capteur. La lecture d'un pixel particulier de la matrice 10 est effectué par l'adressage de la ligne et de la colonne correspondantes. A cet effet, le capteur comprend en outre un circuit d'adressage de ligne 20 couplé aux lignes de la matrice 10 et un bus de sortie 30 couplé aux colonnes de la matrice 10, tous deux commandés par un circuit de commande 40.

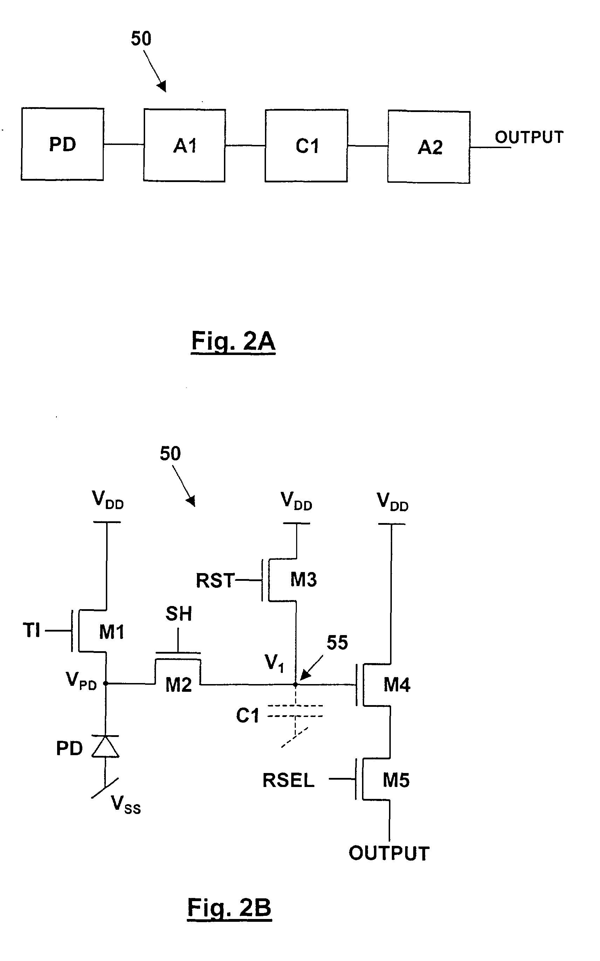

Chaque pixel de la matrice 10 possède une structure conforme à l'illustration de la figure 2A. Ce pixel, indiqué généralement par la référence numérique 50 dans la figure 2A, comporte un élément photo-détecteur PD, un premier étage A1, un moyen de stockage C1 et un second étage A2. L'élément photo-détecteur PD est formé d'une photodiode polarisée inverse qui collecte les électrons photo-générés durant une période dite d'intégration. Le premier étage A1 est un circuit de type "sample-and-hold" assurant l'échantillonnage, à un temps déterminé, de la valeur de tension présente aux bornes de la photodiode PD. Cette valeur échantillonnée est mémorisée dans le moyen de stockage C1 qui est typiquement formé d'une capacité. On notera que la valeur de la tension stockée sur la capacité C1 dépend de la fonction de transfert du premier étage A1 et en particulier du rapport entre la valeur de la capacité de la photodiode PD et de la capacité de le moyen de stockage C1. Le second étage A2 permet quant à lui d'assurer la lecture de la tension échantillonnée mémorisée dans le moyen de stockage C1. La structure schématiquement décrite dans la figure 2A permet avantageusement la séparation des processus de détection et de lecture.

Diverses réalisations sont envisagées et présentées dans le document de l'art antérieur susmentionné. La figure 2B montre en particulier l'une de ces réalisations dans laquelle le pixel 50 comporte la photodiode PD (de type n) polarisé inverse et cinq transistors M1 à M5 de type n-MOS. Chaque pixel 50 comporte un noeud mémoire 55 formé d'une capacité (capacité C1) et protégé de la lumière, par exemple par une couche de protection métallique.

Le transistor M1 assure l'initialisation de la photodiode PD à une tension déterminée avant chaque période d'intégration. Le transistor M2 assure l'échantillonnage de la charge accumulée par la photodiode PD et la mémorisation du signal ainsi échantillonné sur le noeud mémoire 55. Ce transistor M2 assure par ailleurs un isolement ou découplage de la photodiode PD et du noeud mémoire 55. Le transistor M3 assure notamment l'initialisation du noeud mémoire 55 à une tension déterminée. Le transistor M4 est un transistor à "source suiveuse" ("source follower transistor") et le transistor M5 est un transistor de sélection de ligne et assure, lors du processus de lecture, le transfert de la tension du transistor M4 sur un bus de sortie commun à tous les pixels dans une colonne. Les signaux appliqués sur cette structure comprennent une tension d'alimentation haute V_{DD} et une tension d'alimentation basse V_{SS} formant masse, un premier signal d'initialisation TI, un signal d'échantillonnage SH, un second signal d'initialisation RST, et un signal de sélection de ligne RSEL.

Une première borne de la photodiode PD est connectée à la masse V_{SS} et l'autre borne est connectées aux sources des transistors M1 et M2 dont les grilles sont respectivement commandées par les signaux Tl et SH. Les drains des transistors M1, M3 et M4 sont connectés à la tension d'alimentation haute V_{DD}. Le second signal d'initialisation RST est appliqué sur la grille du transistor M3. La source du transistor M3, le drain du transistor M2 et la grille du transistor M4 sont connectés ensemble au noeud mémoire 55 du pixel. La source du transistor M4 est connectée, via le transistor de sélection de ligne M5, au bus de sortie commun à tous les pixels dans une colonne. Le signal de sélection de ligne RSEL est appliqué sur la grille du transistor M5.

Un problème, en terme de performance, rencontré avec la structure du pixel 50 illustrée à la figure 2B réside dans le fait que la charge échantillonnée stockée sur le noeud mémoire 55 ne reste pas constante durant le processus de lecture. En effet, comme cela est décrit dans le document susmentionné, la capacité du noeud mémoire 55 se décharge relativement rapidement de par le fait que les charges photo-générées sous la photodiode PD ont une durée de vie assez longue pour diffuser dans le substrat et venir décharger la capacité du noeud mémoire 55 bien que celle-ci soit protégée de la lumière. Ce problème de diffusion de porteurs de charge est d'autant plus prononcé que l'intensité de la lumière sur la zone photosensible du capteur est élevée. On aura donc compris que ce phénomène de diffusion limite drastiquement le temps disponible pour permettre une lecture des tensions échantillonnées mémorisées sur les capacités des pixels.

Ce problème limite ainsi les performances du capteur. En particulier, on désirera effectuer des expositions globales du capteur, c'est-à-dire exposer simultanément chaque pixel de la matrice du capteur afin d'obtenir notamment des instantanés ou "snapshots" d'une scène dynamique. En pratique, le phénomène de diffusion de porteurs de charge susmentionné ne permettra pas une lecture des tensions échantillonnées mémorisées car ces tensions auront déjà sensiblement varié entre le moment de la lecture des première et dernière lignes de la matrice de pixels.

Un but de la présente invention est ainsi de proposer un procédé permettant d'opérer un capteur d'images CMOS du type susmentionné qui répond au problème de diffusion des porteurs de charge rencontré avec de tels capteurs.

Un autre but de la présente invention est de proposer un procédé permettant d'opérer un capteur d'image CMOS du type susmentionné qui permette une utilisation de ce capteur pour des applications où le temps d'exposition est déterminant car très court.

Encore un autre but de la présente invention est de proposer un procédé permettant d'opérer un capteur d'image CMOS du type susmentionné qui ne nécessite pas l'utilisation d'un obturateur mécanique.

Ces buts sont atteints, selon la présente invention, grâce au procédé dont les caractéristiques sont énoncées à la revendication 1.

Des variantes du procédé selon la présente invention font l'objet des revendications dépendantes.

Un avantage du procédé selon la présente invention réside dans le fait qu'une fois que les charges accumulées par la photodiode lors de la période d'intégration ont été échantillonnées et mémorisées sur la capacité de stockage de chaque pixel, la tension de la photodiode est directement amenée à sa tension d'initialisation en vue de la prochaine acquisition. De la sorte, toute charge photo-générée est capturée ou drainée et ne diffuse ainsi pas dans le substrat jusqu'au noeud mémoire. Le signal échantillonné sur chaque pixel du capteur reste donc constant. Le processus de lecture de chaque pixel, ligne par ligne, peut alors se dérouler conventionnellement sans qu'aucune étape supplémentaire d'exposition ne soit nécessaire.

Selon la présente invention, on rend ainsi possible l'utilisation du capteur d'image pour des applications où le temps d'exposition est très court. On réduit de plus grandement la durée totale nécessaire à l'exposition et au traitement d'une image. On pourra ainsi effectivement parler d'un capteur à obturation globale ou "global shutter".

Un autre avantage de la présente invention réside dans le fait que les opérations d'exposition et de lecture sont rendue entièrement indépendantes. On réalise en outre effectivement une obturation électronique de sorte que tout moyen d'obturation mécanique n'est plus nécessaire pour permettre un bon fonctionnement du dispositif de prise d'image. On réduit ainsi également les coûts de fabrication de ces dispositifs.

Ces objets, caractéristiques et avantages, ainsi que d'autres, de la présente invention apparaîtront plus clairement à la lecture de la description détaillée qui suit, faite en référence aux dessins annexés donnés à titre d'exemples non limitatifs et dans lesquels :
- la figure 1, déjà présentée, illustre schématiquement l'architecture conventionnelle d'un capteur d'image CMOS,
- les figures 2A et 2B, déjà présentées, illustrent respectivement un schéma de principe et un schéma détaillé d'une structure connue d'un pixel du capteur d'image CMOS de la figure 1, et
- la figure 3 est un diagramme temporel illustrant, selon la présente invention, la séquence de signaux appliqués sur la structure du pixel de la figure 2B.

On décrira maintenant au moyen de la figure 3, le procédé selon la présente invention permettant d'opérer le pixel 50 de la figure 2B. La figure 3 montre ainsi un diagramme temporel de l'évolution des signaux de commande TI, SH, RST et RSEL permettant d'opérer la structure de pixel de la figure 2B. On a également schématisé dans cette figure, l'évolution de la tension V_{PD} de la photodiode PD ainsi que l'évolution de la tension V₁ au niveau du noeud mémoire 55 du pixel.

On comprendra que le procédé selon la présente invention n'est pas limité à l'opération d'une structure telle que la structure illustrée à la figure 2B, mais peut-être appliqué de manière analogue à tout type de structure se présentant schématiquement sous la forme de la structure illustrée à la figure 2A, c'est-à-dire une structure comportant un élément photo-détecteur et un moyen de stockage susceptible d'être couplé à l'élément photo-détecteur à un instant déterminé afin de produire et mémoriser un signal échantillonné représentatif des porteurs de charge accumulés par l'élément photo-détecteur lors de l'intégration. La structure de la figure 2B constitue néanmoins une structure simple et particulièrement avantageuse.

On rappellera tout d'abord que le premier signal d'initialisation Tl du transistor M1 assure l'initialisation de la photodiode PD, avant chaque période d'intégration, à une tension d'initialisation déterminée. Le premier signal d'initialisation TI est appliqué de manière globale sur les pixels du capteur, c'est-à-dire que les photodiodes PD de tous les pixels du capteur sont simultanément initialisées, au début de chaque période d'intégration, à la tension d'initialisation.

De même, le signal d'échantillonnage SH est appliqué de manière globale sur les pixels du capteur, de sorte que les tensions des photodiodes sont simultanément échantillonnées et mémorisées sur le noeud mémoire 55 des pixels.

Le second signal d'initialisation RST est appliqué soit de manière globale, soit ligne par ligne. Comme on le verra ultérieurement en détail, ce second signal d'initialisation est tout d'abord appliqué de manière globale afin d'initialiser le noeud mémoire de chaque pixel à une tension d'initialisation déterminée, puis, dans une phase ultérieure, est appliqué ligne par ligne lors du processus de lecture.

Le signal de sélection de ligne RSEL est quant à lui appliqué ligne par ligne lors du processus de lecture.

On peut décomposer le procédé selon la présente invention en plusieurs phases successives qui seront chacune décrite ci-après. Lors d'une première phase A, dite d'initialisation, les premier et second signaux d'initialisation TI et RST sont tous deux amener à un niveau de tension positif haut de manière à initialiser respectivement la photodiode PD et le noeud mémoire 55 de chaque pixel à une tension d'initialisation déterminée.

Durant cette première phase A, le signal d'échantillonnage SH est à un niveau bas tel que le transistor M2 n'est pas conducteur, découplant ainsi la photodiode PD et le noeud mémoire 55. De même, le signal de sélection de ligne RSEL est à un niveau bas de sorte que le transistor de sélection de ligne M5 n'est pas conducteur.

Les tensions résultantes V_{PD} et V₁ sur la photodiode PD et le noeud mémoire 55 respectivement se trouvent donc à des niveaux sensiblement égaux à la tension d'initialisation déterminée.

Durant une seconde phase B, le premier signal d'initialisation TI passe à un niveau bas rendant le transistor M1 non conducteur. Sous l'effet d'une illumination, les photodiodes PD commencent à se décharger proportionnellement à la quantité de lumière que chacune d'entre elles reçoit comme le montre l'évolution de la tension V_{PD} dans la figure 3. On comprendra que le passage du signal d'initialisation TI d'un niveau haut à un niveau bas donne ainsi le départ de l'exposition du capteur à la lumière. C'est le début de la période d'intégration.

Durant toute cette seconde phase B, le second signal d'initialisation RST est maintenu à un niveau tel que la tension du noeud mémoire 55 de chaque pixel est maintenue à une valeur constante sensiblement égale à la tension d'initialisation déterminée.

Au terme de la seconde phase B, le second signal d'initialisation RST passe à un niveau bas, libérant ainsi le noeud mémoire 55. Une troisième phase C suit alors directement ce passage du signal d'initialisation RST d'un niveau haut à un niveau bas. Durant cette phase, le signal d'échantillonnage SH passe brièvement à un niveau haut permettant de rendre le transistor M2 conducteur et permettre ainsi l'échantillonnage de la valeur de tension présente sur la photodiode PD et sa mémorisation, via le transistor d'échantillonnage M2, sur le noeud mémoire 55. La tension V1 du noeud mémoire 55 évolue ainsi comme le montre la figure 3. La fin de cette troisième phase C détermine donc la fin de la durée d'exposition du capteur. En effet, à ce stade, le noeud mémoire 55 de chaque pixel a mémorisé une valeur de tension représentative de la quantité de charges qui ont été générées sous la photodiode PD au cours de l'exposition du capteur.

Brièvement après le repassage du signal d'échantillonnage au niveau bas, le premier signal d'initialisation Tl est amené à nouveau à un niveau tel que chaque photodiode est à nouveau initialisée à une tension sensiblement égale à la tension d'initialisation. De la sorte, toute charge qui serait générée sous l'effet de la lumière au niveau de la photodiode est drainée via le transistor M1. La tension échantillonnée mémorisée sur le noeud mémoire de chaque pixel du capteur n'est ainsi pas perturbée par le phénomène de diffusion de porteurs de charge, de sorte que la tension présente à ce noeud mémoire reste constante.

Durant une quatrième phase D, ou phase de lecture, chaque ligne de pixels du capteur peut ainsi être lue successivement sans courir le risque que la capacité des noeuds mémoires ne se décharge sous l'effet de charges photo-générées qui diffuseraient dans le substrat. Durant la quatrième phase D, chaque ligne est adressée successivement afin de permettre la lecture des tensions échantillonnées de chaque pixel via le bus de sortie de chaque colonne. Au terme de cette quatrième phase, les signaux sont appliqués conformément à la première phase d'initialisation A et la prochaine opération d'acquisition peut débuter.

Préférablement, cette opération de lecture s'effectue selon une technique connue de l'homme du métier sous la dénomination "correlated double sampling" ou CDS. Selon cette technique connue, l'opération de lecture de chaque ligne se décompose en une première phase de lecture de la tension présente sur les noeuds mémoires des pixels dans une ligne suivie d'une seconde phase de lecture durant laquelle les noeuds mémoires des pixels dans la ligne sont réinitialisés. Un signal formé de la différence entre la tension échantillonnée mesurée et la tension d'initialisation du noeud mémoire est alors produit pour chaque pixel. Cette technique permet la suppression du "bruit stable" ou "fixed pattern noise", c'est-à-dire la suppression du bruit présent sur chaque pixel du capteur et qui est dû aux légères différences de sensibilité qui peuvent exister entre les pixels. Comme le montre la figure 3, tant le signal de sélection de ligne RSEL que le second signal d'initialisation RST sont ainsi appliqués ligne par ligne durant la quatrième phase D.

On comprendra donc que selon la présente invention, tous les pixels sont exposés simultanément et que la lecture peut ensuite être effectuée ligne par ligne sans risque que l'information échantillonnée soit dégradée par le phénomène de diffusion de porteurs de charge. Le capteur d'image CMOS opéré selon la présente invention fonctionne ainsi à la manière d'un dispositif photographique disposant d'un obturateur mécanique. En quelque sorte, les transistors d'échantillonnage M2 remplissent ensemble la fonction d'un obturateur électronique.

Au titre d'amélioration contre le phénomène de diffusion de porteur de charge, il est préférable de faire appel à des photodiodes de type n-well, c'est-à-dire des photodiodes formées dans des caissons de type n. Cette structure offre l'avantage de constituer un meilleur obstacle à la diffusion de porteurs de charge qu'une structure de photodiode formée conventionnellement, par exemple d'une simple région de diffusion de type n.

De nombreuses modifications et/ou améliorations de la présente invention peuvent être envisagées sans sortir du cadre de l'invention définie par les revendications annexées. En particulier, la structure du pixel utilisée à titre d'exemple pour illustrer le procédé selon la présente invention pourrait dans le principe être réalisée au moyen d'une technologie p-mos complémentaire ou le cas échéant comprendre des transistors additionnels. On comprendra par exemple que le transistor d'échantillonnage M2 a essentiellement pour rôle de découpler la photodiode et le noeud mémoire du pixel et que d'autres agencements peuvent être prévus pour remplir cette fonction.

## Revendications

1. Procédé permettant d'opérer un capteur d'image CMOS comportant une matrice de pixels (50) agencés en une pluralité de lignes et de colonnes, chacun desdits pixels (50) comportant un élément photo-détecteur (PD) accumulant des porteurs de charge en proportion de son illumination et un moyen de stockage (C1, 55) susceptible d'être couplé au dit élément photo-détecteur (PD) à un instant déterminé afin de produire un signal échantillonné représentatif desdits porteurs de charge accumulés par ledit élément photo-détecteur (PD), ledit moyen de stockage (C1, 55) étant destiné à assurer une mémorisation en vue d'une lecture dudit signal échantillonné,
caractérisé en ce que, lors d'une lecture dudit signal échantillonné, mémorisé sur ledit moyen de stockage (C1, 55), ledit élément photo-détecteur (PD) est maintenu à une tension telle que tout porteur de charge généré par ledit élément photo-détecteur (PD) est drainé et ne perturbe ainsi pas ledit signal échantillonné mémorisé sur ledit moyen de stockage (C1).

2. Procédé selon la revendication 1, caractérisé en ce qu'il comporte :
- une première phase (A) ou phase d'initialisation durant laquelle ledit élément photo-détecteur (PD) et ledit moyen de stockage (C1, 55) sont initialisés à une tension d'initialisation déterminée, ledit élément photo-détecteur (PD) et ledit moyen de stockage (C1, 55) étant découplés;
- une seconde phase (B) ou phase d'exposition durant laquelle ledit élément photo-détecteur (PD) est libéré de ladite tension d'initialisation et accumule des porteurs de charge en proportion de son illumination;
- une troisième phase (C) ou phase d'échantillonnage durant laquelle ledit moyen de stockage, dans un premier temps, est libéré de ladite tension d'initialisation, puis, dans un second temps, est brièvement couplé au dit élément photo-détecteur (PD), permettant ainsi la production dudit signal échantillonné et sa mémorisation sur ledit moyen de stockage (C1, 55); et
- une quatrième phase (D) ou phase de lecture durant laquelle ledit élément photo-détecteur (PD), dans un premier temps, est à nouveau initialisé à ladite tension d'initialisation déterminée, puis, dans un second temps, la lecture dudit signal échantillonné, mémorisé sur ledit moyen de stockage (C1, 55), est opérée.

3. Procédé selon la revendication 2, dans lequel chaque pixel (50) comporte une photodiode (PD) polarisée inverse formant ledit élément photo-détecteur et au moins un premier, un second et un troisième transistor MOS (M1, M2, M3), ladite photodiode (PD) étant connectée, d'une part, à une première tension d'alimentation et, d'autre part, aux sources desdits premier et second transistors (M1, M2), les drains desdits premier et troisième transistors (M1, M3) étant connectés à une seconde tension d'alimentation, le drain dudit second transistor (M2) et la source dudit troisième transistor (M3) étant connectés ensemble et formant un noeud mémoire (55) dudit moyen de stockage (C1),
caractérisé en ce que :
- durant ladite première phase (A), un premier signal d'initialisation (TI) et un second signal d'initialisation (RST) appliqués respectivement sur la grille desdits premier et troisième transistors (M1, M3) de chaque pixel sont amenés à des niveaux tels que, respectivement, ladite photodiode (PD) et ledit noeud mémoire (55) sont initialisés à une tension d'initialisation déterminée, un signal de commande (SH) appliqué sur la grille dudit second transistor (M2) de chaque pixel étant amené à un niveau tel que ladite photodiode (PD) et ledit noeud mémoire (55) sont découplés;
- durant ladite seconde phase (B), ledit premier signal d'initialisation (TI) est amené à un niveau tel que ladite photodiode (PD) est libérée de ladite tension d'initialisation et accumule des porteurs de charge en proportion de son illumination;
- durant ladite troisième phase (C), ledit second signal d'initialisation (RST), dans un premier temps, est amené à un niveau tel que ledit noeud mémoire (55) est libéré de ladite tension d'initialisation, et ledit signal de commande (SH), dans un second temps, est brièvement amené à un niveau tel que ladite photodiode et ledit noeud mémoire sont couplés, permettant ainsi la production dudit signal échantillonné et sa mémorisation sur ledit noeud mémoire (55); et
- durant ladite quatrième phase (D), ledit premier signal d'initialisation (TI), dans un premier temps, est amené à un niveau tel que ladite photodiode (PD) est à nouveau initialisée à ladite tension d'initialisation déterminée, et la lecture dudit signal échantillonné, mémorisé sur ledit noeud mémoire (55), est opérée.

4. Procédé selon la revendication 3 dans lequel chaque pixel (50) comporte en outre des quatrième et cinquième transistors MOS (M4, M5), la grille, le drain et la source dudit quatrième transistor (M4) étant respectivement connectés au dit noeud mémoire (55), à ladite second tension d'alimentation, et au drain dudit cinquième transistor (M5), la source dudit cinquième transistor (M5) fournissant un signal représentatif du signal échantillonné présent sur ledit noeud mémoire (55) lorsqu'un signal de sélection de ligne (RSEL) est appliqué sur la grille dudit cinquième transistor (M5),
caractérisé en ce que, durant ladite quatrième phase (D), chaque ligne de pixels est adressée successivement de manière à permettre la lecture des signaux échantillonnés présents sur les noeuds mémoire (55) de tous les pixels dans une ligne.

5. Procédé selon la revendication 4, caractérisé en ce que, suite à chaque lecture d'une ligne de pixels lors de ladite quatrième phase, ledit second signal d'initialisation (RST) appliqué à chaque troisième transistor (M3) dans cette ligne de pixels est amené à un niveau tel que chaque noeud mémoire (55) dans cette ligne de pixels est à nouveau initialisé à ladite tension d'initialisation déterminé, le signal alors présent sur chaque noeud mémoire (55) dans la ligne de pixels étant utilisé pour produire un signal représentatif de la différence entre le signal présent sur chaque noeud mémoire (55) avant et après l'initialisation.

6. Procédé selon l'une quelconque des revendications 3 à 5, caractérisé en ce que la photodiode (PD) est formée dans un caisson de type n et en ce que lesdits transistors (M1 à M3; M1 à M5) sont des transistors n-MOS.

7. Procédé selon l'une quelconque des revendications précédentes, caractérisé en ce que ledit moyen de stockage (C1) est formé d'une capacité protégée de la lumière par une couche métallique.
